# FASCICULE DE BREVET EUROPEEN

(11) **EP 2 864 256 B1**
(45) Date de publication et mention de la délivrance du brevet: **27.05.2020**
(21) Numéro de dépôt: 13758998.2
(22) Date de dépôt: 19.06.2013
(51) Int. Cl.: C02F 11/04, C02F 3/28, C02F 11/10, C02F 11/18

(54) **PROCÉDÉ DE TRAITEMENT DE BOUES ET INSTALLATION POUR LA MISE EN OEUVRE DE CE PROCÉDÉ**
VERFAHREN ZUR BEHANDLUNG VON SCHLAMM SOWIE ANLAGE ZUR DURCHFÜHRUNG DIESES VERFAHRENS
METHOD FOR TREATING SLUDGE AND FACILITY FOR IMPLEMENTING SAID METHOD

(30) Priorité: 20.06.2012 FR 1255764
(43) Date de publication de la demande: 29.04.2015
(73) Titulaire: Degrémont, 92040 Paris La Défense (FR)
(72) Inventeur: PARDO, Pierre Emmanuel, 91400 Orsay (FR)
(74) Mandataire: IPAZ
(86) Numéro de dépôt international: PCT/IB2013/055033
(87) Numéro de publication internationale: WO 2013/190486

(56) Documents cités:
- DE-A1- 4 418 060
- DE-A1- 19 858 187
- DE-A1- 19 937 876
- DE-A1-102006 038 450
- DE-A1-102007 037 202
- FR-A1- 2 942 792
- US-A1- 2005 194 311

## Description

L'invention est relative à un procédé de traitement de boues de stations d'épuration, pour produire de l'énergie et/ou des matières organiques hygiénisées, comprenant une première étape de digestion de type mésophile ou thermophile d'au moins une fraction d'un flux de déchets organiques.

Le domaine de l'invention est celui de la digestion des déchets organiques notamment ceux qui sont produits au cours du traitement des eaux.

Par la suite, on désignera par le terme « biogaz », le gaz résultant du processus de digestion. Ce biogaz comprend un mélange essentiellement constitué de méthane, de dioxyde de carbone et d'eau.

On désignera par le terme « boues difficiles », toutes matières organiques dont la digestion mésophile à 35-40°C pendant 20 jours ne permet pas de transformer en biogaz, constitué de méthane, plus de 40% de la matière organique présente initialement.

On désignera par le terme le terme « boues faciles », toute matière organique dont la digestion mésophile à 35-40°C pendant 20 jours permet de réduire de plus de 40% la matière organique présente.

La digestion des matières organiques est une voie très efficace de production d'énergie. C'est pourquoi elle se développe beaucoup. Elle possède cependant un certain nombre d'inconvénients :
1. Taille de l'installation importante pour avoir un fort séjour qui permette à la matière organique « difficile » d'être transformée en méthane. L'étape d'hydrolyse des molécules organiques est l'étape limitante.
2. Seule une fraction des matières organiques peut être transformée en méthane. En particulier les parois cellulaires qui sont dans la matière organique sont difficilement digérables. Les rendements globaux des installations de transformation de la matière organique en boues sont rarement supérieurs à 50%.
3. Il faut chauffer les digesteurs pour les maintenir en température, ce qui consomme de l'énergie.

Afin de contrebalancer l'inconvénient n°2, des processus d'hydrolyse thermique sont mis en place. Grâce à l'hydrolyse thermique, une plus forte fraction de la matière organique peut être digérée dans un temps plus court, car l'hydrolyse, n'est plus une étape limitante, et la matière organique, en particulier les parois cellulaires sont décomposées et deviennent digérables.

L'hydrolyse permet aussi une diminution de la viscosité des boues, ce qui permet de pouvoir digérer des concentrations importantes de boues dans le digesteur tout en ayant un brassage homogène.

Cependant les processus d'hydrolyse thermique ont aussi des inconvénients :
- fort coût d'installation qui dépend du débit traversant ces installations.
- fort coût d'exploitation car il faut chauffer la boue avec de l'énergie, parfois noble.

L'ammoniaque produit proportionnellement à la quantité de matière organique digérée est un poison de la digestion à des concentrations élevées. Ce phénomène empêche donc l'utilisation de fortes concentrations de matières organiques dans le digesteur, ce qui réduit l'intérêt de la concentration des matières sèches pour diminuer la taille de l'hydrolyse thermique. Les rendements de digestion même amplifiés (« boostés ») dépassent rarement 50%.

On connaît également des processus d'Oxydation par Voie Humide (OVH). Généralement, le rendement global en production de biogaz ne dépasse pas 30% de la matière organique initiale. De plus ces processus d'OVH présentent des inconvénients :
- fort coût d'installation qui dépend du débit traversant ces installations.
- problèmes avec les échangeurs de chaleur demandant de monter la température suffisamment haute pour que la réaction de combustion se génère elle-même.

US 2005/0194311 divulgue un procédé de traitement de déchets organiques comportant un digesteur deux phases ; un premier réacteur remplit la fonction d'hydrolyse acidification, et un deuxième réacteur assure la méthanogénèse. C'est l'ensemble des deux réacteurs qui forme un digesteur et assure une digestion, c'est-à-dire une production de méthane à partir de matière organique. Le fait qu'il n'y ait qu'un seul « système de digestion », qui digère à la fois les boues hydrolysées et les boues non hydrolysées, limite le rendement de destruction. La filière selon US 2005/0194311 n'apporte pas fondamentalement plus qu'une hydrolyse en amont du système de digestion.

Le document DE 10 2007 037 202 décrit un autre procédé de traitement de déchets organiques connu.

L'invention a pour but, surtout, de fournir un procédé du genre défini précédemment qui permet d'améliorer la production d'énergie et de matières hygiénisées, sans nécessiter des coûts d'installation et d'exploitation trop élevés.

Selon l'invention, le procédé de traitement de déchets organiques, en particulier procédé de traitement de boues de stations d'épuration, lesdites boues à traiter étant classées en deux catégories, boues faciles et boues difficiles,
les « boues difficiles » étant toutes matières organiques dont la digestion mésophile à 35-40°C pendant 20 jours ne permet pas de transformer en biogaz, constitué de méthane, plus de 40% de la matière organique présente initialement,
les « boues faciles », étant toute matière organique dont la digestion mésophile à 35-40°C pendant 20 jours permet de réduire plus de 40% la matière organique présente, pour produire de l'énergie et/ou des matières organiques hygiénisées,
comprend une première étape de digestion de type mésophile ou thermophile d' une fraction d'un flux de déchets organiques, comportant au moins les boues faciles, dans un premier digesteur dimensionné pour un temps de séjour compris entre 9 et 19 jours, ladite fraction étant préalablement réchauffée dans un échangeur, est caractérisé en ce qu'il comporte les étapes suivantes :
- une étape de mélange des boues digérées sortant du digesteur avec les boues difficiles qui n'ont pas été introduites dans le digesteur,- une étape de déshydratation de la totalité des déchets digérés et non digérés, les déchets non digérés étant tout ou partie des boues difficiles, la déshydratation étant faite à 10-20% de matière sèche,
- une étape d'hydrolyse thermique aérée des déchets déshydratés, avec injection d'un oxydant en quantité inférieure à celle correspondant à la stoechiométrie pour l'oxydation des matières organiques, et mise à la température voulue par un moyen de chauffage,
- une étape dans laquelle le flux de déchets organiques en sortie de l'hydrolyse thermique subit un échange de chaleur pour fournir des calories à une boucle d'eau, en particulier avec régulation de la température des déchets organiques en sortie de l'hydrolyse thermique et d'une dilution,
- une étape d'injection d'eau dans le flux de déchets en amont de l'entrée du deuxième digesteur pour assurer la dilution du flux et contrôler le fonctionnement de la deuxième digestion,
- et une deuxième étape de digestion de type mésophile ou thermophile du flux de déchets hydrolysés, séparée de la première étape de digestion, dans un deuxième digesteur dimensionné pour un temps de séjour compris entre 9 et 19 jours.

L'invention définie comprend une filière constituée par les étapes successives suivantes :
- une première digestion,
- une déshydratation,
- une hydrolyse,
- une deuxième digestion.

De préférence, la quantité d'oxydant injectée est comprise entre 10% et 50%, en particulier entre 20% et 30%, de la quantité stoechiométrique.

Le moyen de chauffage lors de l'hydrolyse thermique est avantageusement constitué par au moins une injection de vapeur d'eau. En variante, ce moyen de chauffage pourrait être constitué par une circulation de fluide chaud autour de l'enveloppe extérieure d'un réacteur d'hydrolyse, ou par au moins une résistance électrique dans ce réacteur. Avantageusement, après l'hydrolyse thermique aérée, et avant la deuxième digestion, le flux de déchets est soumis à refroidissement par échange de chaleur permettant de réutiliser les calories sortant de l'hydrolyse thermique aérée pour le chauffage des digesteurs.

Une partie, de préférence moins de 50%, des boues hydrolysées est recyclée, en sortie d'hydrolyse, vers la première digestion.

Lors de l'hydrolyse thermique, les déchets organiques sont chauffés à une température comprise entre 90 et 240°C, sous une pression de 1 à 45 bars, pendant 5 à 90 minutes. De préférence, lors de l'hydrolyse thermique aérée la température est comprise entre 120°C et 200°C, en particulier égale à 160°C, tandis que la pression est comprise entre 4 et 12 bars, en particulier égale à 8 bars.

L'injection d'oxydant peut être contrôlée par une mesure de dioxyde de carbone CO2 dans le ciel gazeux d'un réacteur d'hydrolyse et un étagement de l'injection est réalisé pour assurer une réaction d'hydrolyse homogène.

Une régulation du moyen de chauffage, notamment de l'injection de vapeur, par contrôle de la température dans le ciel gazeux du réacteur d'hydrolyse, peut être prévue. La durée de la première digestion, de même que celle de la deuxième digestion, est avantageusement comprise entre 14 ou 15 jours en mésophile.

Une régulation de la dilution peut être effectuée en fonction de la teneur en ammoniaque et du pH des déchets en sortie de la deuxième digestion.

La régulation de la température des déchets en sortie de l'hydrolyse thermique et de la dilution est avantageusement prévue pour préchauffer les boues en entrée de la première digestion.

La régulation de la température de la boue, ou des déchets, en entrée de la première digestion peut être assurée par chauffage avec la boucle d'eau, et/ou par échange avec la boue hydrolysée.

Le biogaz produit par digestion est avantageusement utilisé comme combustible en cogénération pour produire de l'énergie et de la chaleur, et la chaleur des fumées de combustion du biogaz en sortie d'une ou des cogénérations est utilisée au travers d'un échangeur afin de fournir l'énergie nécessaire à l'hydrolyse thermique aérée.

On peut aussi prévoir une utilisation de la chaleur en sortie d'une ou des cogénérations au travers d'un échangeur afin de fournir l'énergie nécessaire au réchauffage du digesteur.

Il est avantageux de prévoir l'ajout d'un prétraitement, avant l'hydrolyse thermique aérée, pour retirer les filasses et le sable en fonction de la qualité des boues à traiter. Lors de l'hydrolyse thermique aérée un brassage est prévu permettant l'homogénéisation de la boue et de l'oxydant injecté.

Pendant l'hydrolyse, on peut effectuer une injection d'acide ou de base de sorte que, par injection d'acide, on établit un pH acide inférieur à 4, de préférence inférieur à 2, tandis que par injection d'une base, on établit un pH basique supérieur à 10, de préférence inférieur à 12.

L'invention est également relative à une installation pour la mise en œuvre d'un procédé tel que défini précédemment, cette installation comprenant un premier digesteur de type mésophile ou thermophile d'au moins une fraction d'un flux de déchets organiques comportant au moins les boues faciles, le premier digesteur étant dimensionné pour un temps de séjour compris entre 9 et 19 jours, et étant caractérisée en ce qu'elle comporte :
- un déshydrateur de la totalité des déchets digérés et non digérés, les déchets non digérés étant tout ou partie des boues difficiles,
- un réacteur d'hydrolyse thermique aérée des déchets déshydratés, avec moyens d'injection d'un oxydant et un moyen de chauffage pour mise à la température voulue,
- un deuxième digesteur de type mésophile ou thermophile du flux de déchets hydrolysés, séparé du premier digesteur, le deuxième digesteur étant dimensionné pour un temps de séjour compris entre 9 et 19 jours,
- une boucle de fluide thermique comprenant un échangeur thermique dans lequel la boue hydrolysée est refroidie de manière à atteindre la température nécessaire au fonctionnement du deuxième digesteur, ainsi qu'un échangeur pour chauffer la boue en entrée du premier digesteur,
- et des moyens d'injection d'eau dans le flux de déchets en amont de l'entrée du deuxième digesteur pour assurer une dilution du flux et contrôler le fonctionnement de la deuxième digestion

Selon l'invention, les deux digesteurs distincts et séparés constituent deux enceintes produisant chacune du méthane.

Le moyen de chauffage lors de l'hydrolyse thermique est avantageusement constitué par au moins une injection de vapeur d'eau. En variante, ce moyen de chauffage pourrait être constitué par une circulation de fluide chaud autour de l'enveloppe extérieure du réacteur d'hydrolyse, ou par au moins une résistance électrique dans ce réacteur. L'installation comporte de préférence au moins une unité de cogénération pour la combustion du biogaz produit par digestion et pour produire de l'énergie et de la chaleur. Un échangeur est prévu en sortie d'une ou des cogénérations, pour être traversé par des fumées de combustion du biogaz et fournir l'énergie nécessaire à l'hydrolyse thermique aérée et/ou au réchauffage du digesteur.

Le réacteur d'hydrolyse thermique aérée comporte une enveloppe verticale, avec entrée des déchets en partie inférieure, des moyens de chauffage du contenu de l'enveloppe, et des moyens d'injection d'un oxydant au moins en partie inférieure, et de préférence à un niveau supérieur.

Les moyens de chauffage peuvent comprendre des moyens d'injection de vapeur d'eau au moins en partie inférieure, et de préférence vers la mi-hauteur. En variante, les moyens de chauffage peuvent comprendre une circulation de fluide chaud autour de l'enveloppe extérieure du réacteur d'hydrolyse, ou au moins une résistance électrique dans ce réacteur.

Le réacteur d'hydrolyse comporte en outre un dispositif de brassage mécanique ou physique (chicane, pompage en recirculation, brassage...) permettant l'homogénéisation de la boue et de l'oxydant injecté.

L'installation peut comporter un moyen de régulation du pH dans le réacteur d'hydrolyse par injection d'un acide ou d'une base pour améliorer la cinétique d'hydrolyse.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une représentation schématique sous forme de blocs d'une installation pour la mise en œuvre d'un procédé selon l'invention.
Fig. 2 est un schéma d'un réacteur d'hydrolyse aérée selon l'invention, et
Fig.3 est un schéma partiel d'une variante de réalisation d'échangeurs.

Le procédé de l'invention vise à produire de l'énergie et/ou des matières organiques hygiénisées. La description qui suit est donnée en utilisant pour simplifier le terme « boues » qui doit être compris dans un sens très général qui n'est pas limité aux boues de stations d'épuration pour le traitement d'eaux, mais qui s'applique à tout flux de déchets organiques.

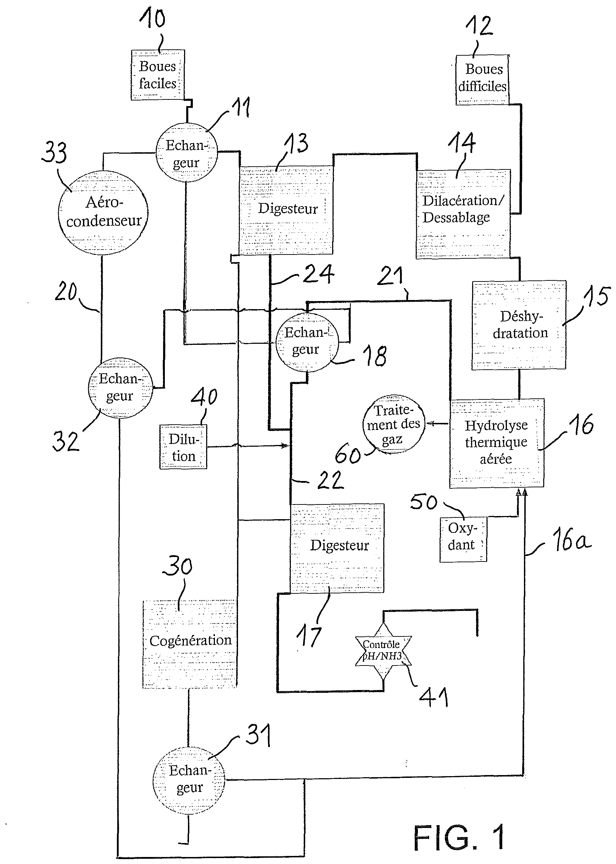

En se reportant aux dessins, notamment à Fig.1, on peut voir que les boues à traiter sont classées en deux catégories : boues faciles 10, et boues difficiles 12, comme exposé initialement.

Une fraction du flux de boues, correspondant au moins aux boues faciles 10, subit un réchauffage dans un échangeur de chaleur 11. L'échangeur 11 est du type eau-boues, et intervient sur le flux de boues non hydrolysées, en entrée d'une étape de digestion dans un digesteur 13.

A noter que les boues difficiles 12 peuvent aussi passer dans cet échangeur 11 si elles sont digérées dans le digesteur 13.

L'échangeur 11 permet, à partir des calories récupérées sur les boues en sortie 21 de l'hydrolyse thermique aérée, de préchauffer les boues en entrée du digesteur 13 afin de ne pas avoir à chauffer ce dernier en continu.

La première étape de digestion dans le digesteur 13 peut être de type mésophile, correspondant à une température de fonctionnement comprise entre 30°C et 45°C, de préférence entre 35°C et 40°C, ou thermophile. correspondant à une température de fonctionnement comprise entre 50°C et 60°C.

Le digesteur 13 traite au moins les boues faciles et une fraction des boues hydrolysées refroidies, formant un flux 24. En fonction de l'équilibre économique de l'ensemble, le digesteur 13 peut traiter aussi une partie ou la totalité des boues difficiles 12. Le digesteur13 est dimensionné pour un temps de séjour compris entre 9 et 19 jours, préférentiellement 14 jours en mésophile. Le digesteur possède son propre circuit de chauffage de secours (non représenté).

Les boues digérées sortant du digesteur 13 sont mélangées aux boues difficiles 12, pour le cas où celles-ci n'ont pas été introduites dans le digesteur 13. Ce mélange peut être effectué dans un appareil de prétraitement 14 de l'ensemble des boues digérées et des boues difficiles afin de retirer les filasses et le sable qui peuvent perturber l'hydrolyse thermique aérée. L'appareil 14 peut comprendre un dilacérateur ainsi qu'un dessableur, en fonction de la qualité de la boue, pour protéger les équipements en aval.

La totalité des boues, digérées et non digérées, est ensuite soumise à une déshydratation dans un déshydrateur 15. Cette déshydratation permet de réduire le volume de boues à traiter par l'hydrolyse thermique aérée et donc les consommations énergétiques. La déshydratation est faite à 10-20% de matières sèches (rapport de la masse de matières sèches à la masse totale matières sèches+liquide), préférentiellement à 17% de matières sèches pour optimiser la taille de l'hydrolyse thermique aérée en fonction de la technologie utilisée et pour optimiser la taille d'un second digesteur 17. Cette valeur de 17% permet de concilier une viscosité pas trop forte des boues, et un coût économique acceptable de l'installation.

Les boues déshydratées sont ensuite soumises à une hydrolyse thermique aérée dans un réacteur d'hydrolyse 16, avec injection d'un oxydant 50 (oxygène, et/ou ozone, et/ou peroxyde d'hydrogène, ou air à défaut) et injection de vapeur d'eau 16a pour chauffer à la température voulue. L'hydrolyse thermique aérée peut être effectuée par fournée (batch) ou en continu.

Lors de cette hydrolyse, les boues sont chauffées à une température comprise entre 90 et 240°C, sous une pression de 1 à 45 bars, pendant 5 à 90 minutes en présence d'une faible quantité d'oxydant (air, oxygène, ozone) afin d'hydrolyser et d'oxyder les molécules organiques et de casser les membranes cellulaires. La quantité d'oxydant injecté est inférieure à celle correspondant à la stoechiométrie pour l'oxydation totale des déchets, c'est-à-dire assurant la transformation du carbone de la matière organique en dioxyde de carbone CO₂. De préférence, la quantité d'oxydant injecté est comprise entre 10% et 50%, en particulier entre 20% et 30%, de la quantité stoechiométrique. L'oxygène O₂ ajouté par l'oxydant est consommé en partie pour casser les molécules et produire des liaisons COH et COOH, et en partie pour produire du dioxyde de carbone CO₂.

La quantité réduite d'oxydant injecté, tout en améliorant l'hydrolyse et la casse des molécules, permet de conserver de la matière organique propre à subir une digestion et à produire du biogaz, en évitant une transformation complète du carbone des molécules en dioxyde du carbone.

Le chauffage à la température voulue lors de l'hydrolyse thermique aérée est avantageusement assuré par injection directe de vapeur d'eau dans les matières en cours d'hydrolyse. Cette injection de vapeur permet de s'affranchir d'un chauffage des matières en cours d'hydrolyse par traversée d'un échangeur de chaleur. De préférence, la température est comprise entre 120°C et 200°C, en particulier égale à 160°C, tandis que la pression est comprise entre 4 et 12 bars, en particulier égale à 8 bars.

L'injection de vapeur d'eau 16a pour chauffer à la température voulue est contrôlée par mesure de la température dans le ciel gazeux du réacteur d'hydrolyse. L'injection de vapeur est réduite ou supprimée si la température dépasse une limite prédéterminée, 240°C au maximum, tandis que l'injection est augmentée dans le cas contraire.

L'injection d'oxydant est contrôlée par une mesure de dioxyde de carbone CO2 dans le ciel gazeux. Un étagement de l'injection d'oxydant est prévu pour assurer une réaction d'hydrolyse homogène.

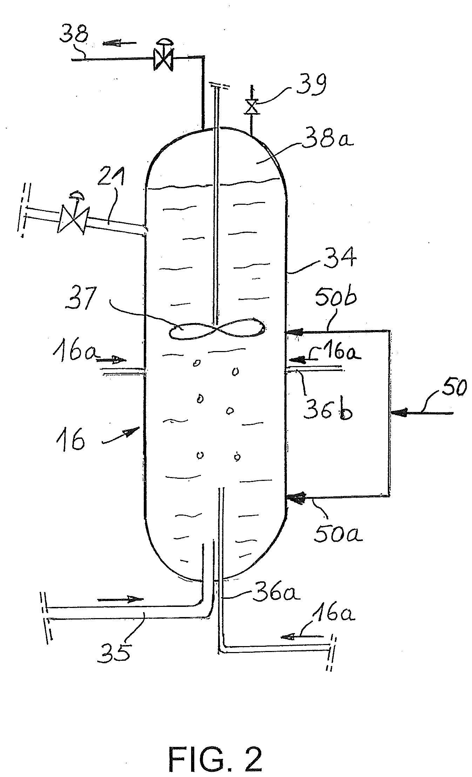

Les boues dans le réacteur d'hydrolyse sont à l'état liquide. Un dispositif est prévu pour le brassage des boues dans le réacteur. Le dispositif de brassage peut être mécanique ou physique : le brassage peut être assuré par un pompage en recirculation, ou en statique par des chicanes. Un brassage mécanique, notamment par hélice comme visible sur Fig.2, est également possible. Le brassage permet l'homogénéisation de la boue et de l'oxydant injecté.

L'installation comporte un circuit ou boucle 20 de fluide thermique, préférentiellement de l'eau.

La boucle 20 de fluide thermique comprend l'échangeur thermique 18 dans lequel la boue hydrolysée est refroidie de manière à atteindre la température (35°C à 65°C) nécessaire au fonctionnement d'un second digesteur 17, en fonction d'une dilution 40 appliquée aux boues par injection d'eau dans les boues.

La boucle 20 peut être scindé e en deux boucles différentes comportant, l'une l'échangeur 11, et l'autre l'échangeur 18, de manière à ce que les fonctions de réchauffage et de refroidissement soient toujours assurées.

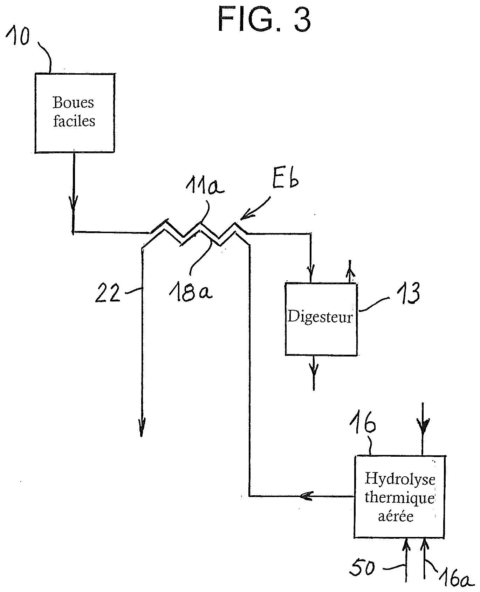

La régulation de la température à l'entrée du digesteur 17 peut se faire par un circuit (non représenté) de dérivation (by-pass) de l'échangeur 18 par la boucle d'eau 20. En fonction des dimensionnements des deux digesteurs 13, 17, les échangeurs 11 et 18 peuvent devenir communs, sous forme d'un échangeur Eb boues / boues, selon Fig.3, avec section 18a de boues chaudes, provenant du réacteur d'hydrolyse 16, transmettant la chaleur aux boues à traiter traversant une section 11a en liaison thermique avec le circuit 18a.

La boucle 20 comprend aussi l'échangeur thermique 11.La chaleur fournie à la boucle 20 de fluide thermique permet de chauffer la boue en entrée du digesteur 13 de manière contrôlée à travers cet échangeur 11.

La boucle 20 comprend également un échangeur thermique 32 entre l'eau de la boucle et de la vapeur d'eau obtenue à partir de la chaleur produite par une cogénération 30. En cas de besoin thermique au niveau de la boue en sortie 23 de l'échangeur 11, la vapeur produite est utilisée pour réchauffer la boucle d'eau chaude 20.

La boucle 20 comporte aussi, pour le cas d'un surplus de chaleur, un refroidisseur 33 du type aérocondenseur, ou échangeur eau/eau ou tout autre type de refroidisseur, qui permet de refroidir la boucle d'eau de telle sorte que l'échangeur 18 remplisse toujours son office de refroidissement de la boue.

Une recirculation 24 de boue hydrolysée refroidie, de préférence inférieure à 50%, est avantageusement prévue dans le digesteur 13 afin d'augmenter le rendement global de conversion en biogaz et de diminuer la dilution 40 imposée par les concentrations en ammoniaque dans le digesteur 17.

La dilution 40 est effectuée par injection d'eau, en aval de l'échangeur 18 et de la conduite de dérivation 24 vers le digesteur 13, et en amont du digesteur 17. Cette dilution, en particulier, est effectuée en fonction de la concentration mesurée en continu du taux d'ammoniaque en sortie du digesteur 17. La dilution est augmentée lorsque le taux d'ammoniaque en sortie augmente, et inversement en cas de diminution. Cette régulation permet d'optimiser le fonctionnement du digesteur 17 en garantissant des conditions toujours optimales de fonctionnement.

Les boues hydrolysées, après dilution 40, sont soumises à une deuxième digestion dans le deuxième digesteur 17 de type mésophile ou thermophile. Le digesteur 17 récupère une partie des boues hydrolysées, puisqu'une autre partie est recyclée dans le premier digesteur 13. Le digesteur 17 est dimensionné pour un temps de séjour compris entre 9 et 19 jours, préférentiellement 15 jours en mésophile. Le digesteur 17 possède son propre circuit de chauffage de secours, non représenté.

Un contrôle 41 du pH et de la teneur en ammoniac NH₃ des boues est effectué en sortie du digesteur 17, ou dans une boucle de recirculation du digesteur. Ce contrôle permet de vérifier que le digesteur 17 est toujours dans des conditions optimales de fonctionnement. En cas de valeur trop élevée de l'ammoniac NH₃ libre dans la boue, la dilution 40 est ouverte, c'est à dire augmentée, pour rétablir l'équilibre.

Le biogaz, essentiellement du méthane, produit dans les digesteurs est envoyé sur un ensemble 30 formé d'une ou de plusieurs cogénérations qui permettent l'utilisation, après traitement ou non, du biogaz qui sert de combustible à des fins de production énergétique. La cogénération peut être une simple chaudière ou une cogénération électricité-chaleur.

L'installation comporte avantageusement une unité de production de vapeur 31 sur la sortie d'une ou des cogénérations. L'unité 31 peut être constituée par un échangeur de chaleur entre fumées de la cogénération et vapeur d'eau. Cette vapeur d'eau est utilisée pour alimenter l'hydrolyse thermique en énergie thermique mais aussi pour compléter la chaleur nécessaire au digesteur 13, soit en chauffant la boucle de chaleur 20 à travers un échangeur 32, soit en chauffant la boucle interne (non représentée) de chauffage du digesteur 13.

Il est en outre possible de prévoir un moyen de régulation du pH dans le réacteur d'hydrolyse par injection d'un acide ou d'une base pour améliorer la cinétique d'hydrolyse. Par injection d'acide on établit un pH acide inférieur à 4, de préférence inférieur à 2, tandis que par injection d'une base, on établit un pH basique supérieur à 10, de préférence inférieur à 12. Lorsque l'on procède à une telle injection d'acide ou de base, le chauffage du réacteur d'hydrolyse peut être réduit, sans baisse du rendement d'hydrolyse.

Un traitement des gaz 60 adapté est prévu pour les gaz (CO2, composés organiques volatils COV) sortant de l'hydrolyse thermique et potentiellement non dirigeables vers la digestion.

Fig. 2 est une coupe verticale schématique d'un réacteur 16 d'hydrolyse thermique aérée selon l'invention. Le réacteur comporte une enveloppe cylindrique verticale 34 prévue pour résister à la pression régnant lors de l'hydrolyse. Les boues déshydratées sont introduites en partie inférieure du réacteur par une tubulure 35. La température des boues à l'entrée du réacteur 16 peut être d'environ 200°C.

La vapeur d'eau 16a est introduite par des moyens d'injection 36a, notamment des buses d'injection, au moins en partie inférieure du réacteur, et de préférence par d'autres moyens d'injection 36b sensiblement à mi-hauteur du réacteur. La vapeur d'eau peut être à une température d'environ 200°C sous une pression de 12 bars.

L'oxydant 50, notamment de l'oxygène, est injecté de préférence en plusieurs points, notamment un point bas avec moyen d'injection, ou buse, 50a et un point sensiblement à mi-hauteur avec moyen d'injection 50b.

Le dispositif de brassage de la matière contenue dans le réacteur 16 peut être mécanique et comporter par exemple une hélice 37 portée par un arbre vertical rotatif traversant de manière étanche la paroi supérieure du réacteur. En variante, le dispositif de brassage peut être constitué d'une pompe de recirculation sur le réacteur; l'injection d'oxydant est alors effectuée avantageusement dans la boucle de recirculation. Selon une autre variante, le dispositif de brassage peut comprendre des chicanes.

Une canalisation 38, équipée d'une vanne automatique, partant de la partie supérieure du réacteur, permet d'évacuer, vers le traitement 60, des gaz provenant du ciel gazeux 38a du réacteur. La température de ces gaz peut être d'environ 200°C. Une soupape de sécurité 39 est installée sur la paroi supérieure du réacteur. La conduite 21 d'évacuation des boues hydrolysées débouche dans le réacteur 16 au-dessous du niveau de séparation entre le ciel gazeux 38a et la masse de matières hydrolysées.

L'invention procure de nombreux avantages.

Lors de l'hydrolyse aérée, l'oxygène ou tout autre oxydant présent permet de réduire les réactions parasites conduisant à des produits réfractaires comme les réactions de Maillard.

Par rapport à une digestion simple ou à une digestion assistée par hydrolyse thermique, l'invention permet d'obtenir :
- une augmentation de la quantité de biogaz produit, le rendement de conversion de la matière organique en biogaz pouvant aller au-delà de 70% ; ceci est dû à la quantité réduite d'oxydant injecté qui permet, tout en cassant les molécules, d'éviter de transformer tout le carbone organique en CO₂ et de conserver de la matière organique propre à subir une digestion et à produire du biogaz,
- une diminution de la quantité de résidu final pouvant aller au-delà de 80% de réduction de la matière organique,
- une boue très facilement déshydratable et totalement hygiénisée,
- une diminution de la taille des digesteurs, donc diminution des coûts,
- un coût quasi identique à celui d'une digestion assistée par hydrolyse thermique car les tailles de réacteurs sont identiques et seuls les moyens d'injection d'un oxydant : air, oxygène, ozone, sont ajoutés.

Enfin l'invention apporte aussi comme avantages :
- une diminution de la quantité de biogaz utilisé à des fins énergétiques (chauffage de l'hydrolyse thermique aérée, chauffage du digesteur) grâce aux réductions définies ci-dessus et à un bouclage énergétique performant,
- une optimisation du fonctionnement des digesteurs par régulation de la dilution en entrée du dernier digesteur,
- une fiabilité du processus de fonctionnement,
- une diminution de la taille de l'hydrolyse thermique,
- une diminution de la consommation d'énergie à la fois pour l'hydrolyse thermique et pour la digestion.

Selon l'invention, le premier digesteur 13 est dimensionné de manière à ce que le rendement de digestion soit optimisé. En fonction de la boue facile utilisée, ce dimensionnement sera de 9 à 19 jours, préférentiellement 14 en mésophile au lieu des 20 jours habituellement utilisés. La fraction de boues hydrolysée recyclée sera prise en compte dans le temps de séjour.

De la même manière, le deuxième digesteur 17 est dimensionné avec un temps de digestion optimisé en fonction de la digestion, à savoir entre 9 et 19 jours, préférentiellement 15 jours en mésophile, au lieu des 20 jours habituellement utilisés.

Ces temps sont un compromis entre l'équilibre de la digestion (équilibre des populations bactériennes) et le rendement atteignables par la digestion.

Ainsi, par rapport à une digestion classique de 20 jours, pour une boue constituée en volume de 50% de boues faciles et de 50 % de boues difficiles, à une concentration de 5% MS, le volume de digestion est diminué de plus de 30%. La quantité de biogaz produite est augmentée de plus de 50%.

## Revendications

1. Procédé de traitement de boues, lesdites boues à traiter étant classées en deux catégories, boues faciles (10) et boues difficiles (12),
les « boues difficiles » étant toutes matières organiques dont la digestion mésophile à 35-40°C pendant 20 jours ne permet pas de transformer en biogaz, constitué de méthane, plus de 40% de la matière organique présente initialement, les « boues faciles », étant toute matière organique dont la digestion mésophile à 35-40°C pendant 20 jours perm et de réduire plus de 40% la matière organique présente,
pour produire de l'énergie et/ou des matières organiques hygiénisées, comprenant une première étape de digestion de type mésophile ou thermophile (13) d'une fraction d'un flux de déchets organiques comportant au moins les boues faciles (10), dans un premier digesteur (13) dimensionné pour un temps de séjour compris entre 9 et 19 jours,
ladite fraction étant préalablement réchauffée dans un échangeur (11), **caractérisé en ce qu'**il comporte les étapes suivantes :
- une étape de mélange des boues digérées sortant du digesteur (13) avec les boues difficiles (12) qui n'ont pas été introduites dans le digesteur (13),
- une étape de déshydratation (15) de la totalité des déchets digérés et non digérés, les déchets non digérés étant tout ou partie des boues difficiles (12), la déshydratation étant faite à 10-20% de matière sèche,
- une étape d'hydrolyse thermique aérée (16) des déchets déshydratés, avec injection d'un oxydant en quantité inférieure à celle correspondant à la stoechiométrie pour l'oxydation des matières organiques et mise à la température voulue par un moyen de chauffage,
- une étape dans laquelle le flux de déchets organiques en sortie de l'hydrolyse thermique subit un échange de chaleur (18) pour fournir des calories à une boucle d'eau (20), en particulier avec régulation de la température des déchets organiques en sortie de l'hydrolyse thermique (16) et d'une dilution (40),
- une étape d'injection d'eau dans le flux de déchets en amont de l'entrée du deuxième digesteur pour assurer la dilution (40) du flux et contrôler le fonctionnement de la deuxième digestion,- et une deuxième étape de digestion (17) de type mésophile ou thermophile du flux de déchets hydrolysés, séparée de la première étape de digestion, dans un deuxième digesteur (17) dimensionné pour un temps de séjour compris entre 9 et 19 jours,

2. Procédé selon la revendication 1, **caractérisé en ce que** la quantité d'oxydant injectée est comprise entre 10% et 50%, en particulier entre 20% et 30%, de la quantité stoechiométrique.

3. Procédé selon la revendication 1 ou 2, **caractérisé en ce que** le moyen de chauffage lors de l'hydrolyse thermique est avantageusement constitué par au moins une injection de vapeur d'eau (16a).

4. Procédé selon l'une quelconque des revendications précédentes, **caractérisé en ce qu'**après l'hydrolyse thermique aérée, et avant la deuxième digestion, le flux de déchets est soumis à refroidissement par échange de chaleur (18,18a) permettant de réutiliser les calories sortant de l'hydrolyse thermique aérée pour le chauffage des digesteurs.

5. Procédé selon l'une quelconque des revendications précédentes, **caractérisé en ce qu'**une partie (24) des boues hydrolysées est recyclée, en sortie d'hydrolyse, vers la première digestion (13).

6. Procédé selon l'une quelconque des revendications précédentes, **caractérisé en ce que**, lors de l'hydrolyse thermique, les déchets organiques sont chauffés à une température comprise entre 90 et 240°C, sous une pression de 1 à 45 bars, pendant 5 à 90 minutes.

7. Procédé selon la revendication 6, **caractérisé en ce que**, lors de l'hydrolyse thermique aérée, la température est comprise entre 120°C et 200°C, en particulier égale à 160°C, tandis que la pression est comprise entre 4 et 12 bars, en particulier égale à 8 bars.

8. Procédé selon l'une quelconque des revendications précédentes, **caractérisé en ce que** l'injection d'oxydant est contrôlée par une mesure de dioxyde de carbone CO2 dans le ciel gazeux d'un réacteur d'hydrolyse et qu'un étagement de l'injection est réalisé pour assurer une réaction homogène.

9. Procédé selon la revendication 3, **caractérisé en ce qu'**il comporte une régulation de l'injection de vapeur par contrôle de la température dans le ciel gazeux d'un réacteur d'hydrolyse.

10. Procédé selon la revendication 1, **caractérisé en ce que** la durée de la première digestion, de même que celle de la deuxième digestion, est de 14 ou 15 jours en mésophile.

11. Procédé selon la revendication 1, **caractérisé en ce qu'**une régulation de la dilution (40) est effectuée en fonction de la teneur en ammoniac et du pH en sortie de la deuxième digestion.

12. Procédé selon la revendication 1, **caractérisé en ce qu'**une régulation de la température de la boue est prévue en entrée de la première digestion (13), par chauffage avec la boucle d'eau (20), et/ou par échange avec la boue hydrolysée (21)

13. Procédé selon la revendication 1, **caractérisé en ce que** le biogaz produit par digestion est utilisé comme combustible en cogénération (30) pour produire de l'énergie et de la chaleur, et **en ce que** la chaleur des fumées du biogaz en sortie d'une ou des cogénérations (30) est utilisée au travers d'un échangeur (31) afin de fournir l'énergie nécessaire à l'hydrolyse thermique aérée.

14. Procédé selon la revendication 13, **caractérisé en ce que** l'on prévoit une utilisation de la chaleur en sortie d'une ou des cogénérations (30) au travers d'un échangeur (32) afin de fournir l'énergie nécessaire au réchauffage du digesteur (13).

15. Procédé selon la revendication 1, **caractérisé par** l'ajout d'un prétraitement (14) visant à retirer les filasses et le sable en fonction de la qualité des boues à traiter.

16. Procédé selon l'une quelconque des revendications précédentes, **caractérisé en ce que**, pendant l'hydrolyse, on effectue une injection d'acide ou de base de sorte que, par injection d'acide, on établit un pH acide inférieur à 4, de préférence inférieur à 2, tandis que par injection d'une base, on établit un pH basique supérieur à 10, de préférence inférieur à 12.

17. Installation pour la mise en œuvre d'un procédé de traitement de boues selon la revendication 1, lesdites boues à traiter étant classées en deux catégories, boues faciles (10) et boues difficiles (12), **caractérisée en ce qu'**elle comporte :
- un premier digesteur (13) de type mésophile ou thermophile d'une fraction d'un flux de déchets organiques comportant au moins les boues faciles (10), le premier digesteur 13 étant dimensionné pour un temps de séjour compris entre 9 et 19 jours,
- un déshydrateur (15) de la totalité des déchets digérés et non digérés, les déchets non digérés étant tout ou partie des boues difficiles (12),
- un réacteur d'hydrolyse thermique aérée (16) des déchets déshydratés, avec moyens d'injection (50a, 50b) d'un oxydant (50) et un moyen de chauffage pour mise à la température voulue,
- un deuxième digesteur (17) de type mésophile ou thermophile du flux de déchets hydrolysés, séparé du premier digesteur, le deuxième digesteur 17 étant dimensionné pour un temps de séjour compris entre 9 et 19 jours.
- une boucle (20) de fluide thermique comprenant un échangeur thermique (18) dans lequel la boue hydrolysée est refroidie de manière à atteindre la température nécessaire au fonctionnement du deuxième digesteur (17), ainsi qu'un échangeur (11) pour chauffer la boue en entrée du premier digesteur (13),
- et des moyens d'injection d'eau dans le flux de déchets en amont de l'entrée du deuxième digesteur pour assurer une dilution (40) du flux et contrôler le fonctionnement de la deuxième digestion.

18. Installation selon la revendication 17, **caractérisée en ce qu'**elle comporte au moins une unité de cogénération (30) pour la combustion du biogaz produit par digestion et pour produire de l'énergie et de la chaleur, un échangeur (31) étant prévu en sortie d'une ou des cogénérations pour être traversé par des fumées de combustion du biogaz et fournir l'énergie nécessaire à l'hydrolyse thermique aérée et/ou au réchauffage du digesteur.

19. Installation selon l'une quelconque des revendications 17 à 18, **caractérisée en ce qu'**elle comporte un moyen de régulation du pH dans le réacteur d'hydrolyse par injection d'un acide ou d'une base pour améliorer la cinétique d'hydrolyse.

## Patentansprüche

1. Verfahren zur Behandlung von Schlämmen, wobei die zu behandelnden Schlämme in zwei Kategorien unterteilt sind, nämlich Leichtschlämme (10) und Schwerschlämme (12),
wobei "Schwerschlämme" alle organischen Materialien sind, deren mesophile Faulung bei 35-40°C für eine Dauer von 20 Tagen es nicht ermöglicht, mehr als 40 % des ursprünglich vorhandenen organischen Materials zu Biogas, bestehend aus Methan, zu verarbeiten, wobei "Leichtschlämme" alle organischen Materialien sind, deren mesophile Faulung bei 35-40 °C für eine Dauer von 20 Tagen es ermöglicht, mehr als 40 % des vorhandenen organischen Materials zu reduzieren,
zum Produzieren von Energie und/oder hygienisierten organischen Materialien mit einem ersten Schritt der mesophilen und thermophilen Faulung (13) einer Fraktion eines organischen Abfallstroms, die zumindest die Leichtschlämme (10) umfasst, in einem ersten Faulbehälter (13), der für eine Aufenthaltsdauer zwischen 9 und 19 Tagen dimensioniert ist,
wobei die Fraktion vorab in einem Austauscher (11) wiedererhitzt wird, **dadurch gekennzeichnet, dass** das Verfahren die folgenden Schritte umfasst:
- einen Schritt der Mischung der aus dem Faulbehälter (13) kommenden Faulschlämme mit den Schwerschlämmen (12), die nicht in den Faulbehälter (13) eingebracht wurden,
- einen Schritt der Entwässerung (15) aller verfaulten und nicht verfaulten Abfälle, wobei die nicht verfaulten Abfälle ganz oder teilweise aus Schwerschlamm (12) bestehen und die Entwässerung bei 10-20 % der Trockenmasse erfolgt,
- einen Schritt der aeroben thermischen Hydrolyse (16) von dehydratisierten Abfällen mittels Injektion eines Oxidationsmittels in einer Menge, die geringer ist als die, die der Stöchiometrie für die Oxidation von organischem Material entspricht, und die durch ein Heizmedium auf die gewünschte Temperatur gebracht wird,
- einen Schritt, bei dem der organische Abfallstrom beim Abschluss der thermische Hydrolyse einem Wärmeaustausch (18) unterzogen wird, um einem Wasserkreislauf (20) Wärmeeinheiten zuzuführen, insbesondere durch Regelung der Temperatur organischer Abfälle beim Abschluss der thermischen Hydrolyse (16) und einer Verdünnung (40),
- einen Schritt der Injektion von Wasser in den Abfallstrom stromaufwärts des Eingangs des zweiten Faulbehälters, um die Verdünnung (40) des Stroms zu gewährleisten und den Betrieb des zweiten Faulbehälters zu steuern, und
- einen zweiten Schritt der mesophilen oder thermophilen Faulung (17) des hydrolysierten Abfallstroms, der von dem ersten Faulungsschritt getrennt ist, in einem zweiten Faulbehälter (17), der für eine Aufenthaltsdauer zwischen 9 und 19 Tagen dimensioniert ist.

2. Verfahren nach Anspruch 1, **dadurch gekennzeichnet, dass** die injizierte Menge an Oxidationsmittel zwischen 10 % und 50 %, insbesondere zwischen 20 % und 30 %, der stöchiometrischen Menge umfasst.

3. Verfahren nach Anspruch 1 oder 2, **dadurch gekennzeichnet, dass** das Heizmedium der thermischen Hydrolyse vorteilhafterweise aus der Wasserdampfinjektion (16a) besteht.

4. Verfahren nach einem der vorstehenden Ansprüche, **dadurch gekennzeichnet, dass** nach der aeroben thermischen Hydrolyse und vor der zweiten Faulung der Abfallstrom einer Abkühlung durch einen Wärmeaustausch (18, 18a) unterzogen wird, wodurch das Wiederverwenden der aus der aeroben thermischen Hydrolyse stammenden Wärmeeinheiten zur Erhitzung der Faulbehälter ermöglicht wird.

5. Verfahren nach einem der vorstehenden Ansprüche, **dadurch gekennzeichnet, dass** ein Teil (24) der hydrolysierten Schlämme beim Abschluss der Hydrolyse der ersten Faulung (13) zur Wiederverwendung zugeführt wird.

6. Verfahren nach einem der vorstehenden Ansprüche, **dadurch gekennzeichnet, dass** bei der thermischen Hydrolyse die organischen Abfälle auf eine Temperatur zwischen 90 und 240 °C, unter einem Druck von 1 bis 45 bar, 5 bis 90 Minuten erhitzt werden.

7. Verfahren nach Anspruch 6, **dadurch gekennzeichnet, dass** bei der aeroben thermischen Hydrolyse die Temperatur zwischen 120 °C und 200 °C beträgt und insbesondere gleich 160 °C ist, während der Druck zwischen 4 und 12 bar beträgt und insbesondere gleich 8 bar ist.

8. Verfahren nach einem der vorstehenden Ansprüche, **dadurch gekennzeichnet, dass** die Injektion des Oxidationsmittels durch eine Messung von Kohlendioxid CO2 in der Gasatmosphäre eines Hydrolysereaktors gesteuert wird und dass eine Abstufung der Injektion realisiert wird, um eine homogene Reaktion zu gewährleisten.

9. Verfahren nach Anspruch 3, **dadurch gekennzeichnet, dass** das Verfahren eine Regelung der Dampfinjektion umfasst durch Steuerung der Temperatur in der Gasatmosphäre eines Hydrolysereaktors.

10. Verfahren nach Anspruch 1, **dadurch gekennzeichnet, dass** die Dauer der ersten Faulung, genau wie bei der zweiten Faulung, 14 oder 15 Tage beträgt.

11. Verfahren nach Anspruch 1, **dadurch gekennzeichnet, dass** eine Regelung der Verdünnung (40) in Abhängigkeit des Ammoniakgehalts und des pH-Werts beim Abschluss der zweiten Faulung erfolgt.

12. Verfahren nach Anspruch 1, **dadurch gekennzeichnet, dass** eine Regelung der Temperatur des Schlamms mit dem Eintritt der ersten Faulung (13) vorgesehen ist durch Erhitzung mit dem Wasserkreislauf (20) und/oder durch Austausch mit dem hydrolysierten Schlamm (21).

13. Verfahren nach Anspruch 1, **dadurch gekennzeichnet, dass** das durch Faulung hergestellte Biogas als Brennstoff bei der Kraft-Wärme-Kopplung (30) zur Erzeugung von Energie und Wärme verwendet wird und dass die Wärme der Biogasdämpfe beim Abschluss einer oder mehrerer Kraft-Wärme-Kopplungen (30) über einen Austauscher (31) verwendet wird, um die für die aerobe thermische Hydrolyse erforderliche Energie bereitzustellen.

14. Verfahren nach Anspruch 13, **dadurch gekennzeichnet, dass** eine Wärmenutzung beim Abschluss einer oder mehrerer Kraft-Wärme-Kopplungen (30) über einen Austauscher (32) vorgesehen ist, um die für die Wiedererhitzung des Faulbehälters (13) erforderliche Energie bereitzustellen.

15. Verfahren nach Anspruch 1, **gekennzeichnet durch** das Hinzufügen einer Vorbehandlung (14) zum Entfernen von Fasern und Sand in Abhängigkeit von der Qualität der zu behandelnden Schlämme.

16. Verfahren nach einem der vorstehenden Ansprüche, **dadurch gekennzeichnet, dass** während der Hydrolyse eine Injektion von Säure oder Base erfolgt, so dass durch Injektion von Säure ein saurer pH-Wert unter 4, vorzugsweise unter 2, erreicht wird, wohingegen durch Injektion einer Base ein basischer pH-Wert über 10, vorzugweise unter 12, erreicht wird.

17. Einrichtung zum Umsetzen eines Verfahrens zur Behandlung von Schlämmen nach Anspruch 1, wobei die zu behandelnden Schlämme in zwei Kategorien unterteilt sind, nämlich Leichtschlämme (10) und Schwerschlämme (12), **dadurch gekennzeichnet, dass** die Einrichtung aufweist:
- einen ersten mesophilen oder thermophilen Faulbehälter (13) für eine Fraktion eines organischen Abfallstroms, die zumindest die Leichtschlämme (10) umfasst, wobei der erste Faulbehälter (13) für eine Aufenthaltsdauer zwischen 9 und 19 Tagen dimensioniert ist,
- einen Entwässerer (15) für alle verfaulten und nicht verfaulten Abfälle, wobei die nicht verfaulten Abfälle ganz oder teilweise aus Schwerschlamm (12) bestehen,
- einen aeroben thermischen Hydrolysereaktor (16) für dehydratisierte Abfälle mit Injektionsvorrichtungen (50a, 50b) für ein Oxidationsmittel (50) und einem Heizmedium zum Erhitzen auf die gewünschte Temperatur,
- einen zweiten mesophilen oder thermophilen Faulbehälter (17) für hydrolysierten Abfallstrom, der von dem ersten Faulbehälter getrennt ist, wobei der zweite Faulbehälter (17) für eine Aufenthaltsdauer zwischen 9 und 19 Tagen dimensioniert ist,
- einen thermischen Fluidkreislauf (20), der einen Wärmetauscher (18) aufweist, in dem der hydrolysierte Schlamm gekühlt wird, um die für den Betrieb des zweiten Faulbehälters (17) erforderliche Temperatur zu erreichen, und der einen Austauscher (11) zum Erhitzen des Schlamms am Eingang des ersten Faulbehälters (13) aufweist, und
- Vorrichtungen zur Injektion von Wasser in den Abfallstrom stromaufwärts des Eingangs des zweiten Faulbehälters, um eine Verdünnung (40) des Stroms zu gewährleisten und den Betrieb des zweiten Faulbehälters zu steuern.

18. Einrichtung nach Anspruch 17, **dadurch gekennzeichnet, dass** diese mindestens eine Kraft-Wärme-Kopplungseinheit (30) zur Verbrennung des durch die Faulung erzeugten Biogases und zur Erzeugung von Energie und Wärme aufweist, wobei am Ausgang einer oder mehrerer Kraft-Wärme-Kopplungseinheiten ein Austauscher (31) vorgesehen ist, der von den Verbrennungsdämpfen des Biogases durchströmt wird und die für die aerobe thermische Hydrolyse und/oder die Wiedererhitzung des Faulbehälters erforderliche Energie liefert.

19. Einrichtung nach einem der Ansprüche 17 bis 18, **dadurch gekennzeichnet, dass** diese eine Vorrichtung zur Regulierung des pH-Werts in dem Hydrolysereaktor durch Injektion einer Säure oder einer Base zur Verbesserung der Kinetik der Hydrolyse aufweist.

## Claims

1. A process for treating sludge, said sludge to be treated being categorized into two categories, easy sludge 10, and difficult sludge 12, "difficult sludge" denoting any organic matter of which the mesophilic digestion at 35-40° C. for 20 days does not make it possible to convert into biogas, consisting of methane, more than 40% of the organic matter initially present, "easy sludge" denoting any organic matter of which the mesophilic digestion at 35-40° C. for 20 days makes it possible to reduce the organic matter present by more than 40%,
in order to produce energy and/or organic matter which has been rendered hygienic, comprising a first step of mesophilic or thermophilic digestion (13) of one fraction of a stream of organic waste, comprising at least "easy sludge" in a first digester (13) dimensioned for a residence time of between 9 and 19 days, said fraction being beforehand heated in a heat exchanger (11)
**characterized in that** it comprises the following steps:
- a step of mixing the digested sludge leaving the digester (13) with the "difficult sludge" (12) which has not been introduced into the digester (13),
- a step of dehydration (15) of all of the digested and undigested waste, undigested waste being all or part of the difficult sludge (12), the dehydration being carried out to 10-20% of dry matter,
- a step of aerated thermal hydrolysis (16) of the dehydrated waste, with the injection of an oxidizing agent in an amount lower than the stoichiometric amount for the oxidation of the organic matter, and setting to the required temperature via a heating means,
- a step in which the flow of organic waste at the outlet of the thermal hydrolysis undergoes a heat exchange (18) to supply calories to a water loop (20), in particular with regulation of the temperature of the organic waste in exit from thermal hydrolysis (16) and dilution (40),
- a step of injecting water into the waste stream upstream of the inlet of the second digester to dilute (40) the stream and control the operation of the second digestion, in a second digester (17) dimensioned for a residence time of between 9 and 19 days,
- and a second mesophilic or thermophilic step of digestion (17) of the stream of hydrolyzed waste, separate from the first digestion step.

2. The process as claimed in claim 1, **characterized in that** the amount of oxidizing agent injected is between 10% and 50%, in particular between 20% and 30%, of the stoichiometric amount.

3. The process as claimed in claim 1 or 2, **characterized in that** the means for heating during the thermal hydrolysis is advantageously made up of at least one steam injection (16a).

4. The process as claimed in any one of the preceding claims, **characterized in that**, after the aerated thermal hydrolysis, and before the second digestion, the stream of waste is subjected to cooling by heat exchange (18, 18a) making it possible to reuse the heat exiting the aerated thermal hydrolysis for heating the digesters.

5. The process as claimed in any one of the preceding claims, **characterized in that** a part (24) of the hydrolyzed sludge is recycled, at the output of hydrolysis, to the first digestion (13).

6. The process as claimed in any one of the preceding claims, **characterized in that**, during the thermal hydrolysis, the organic waste is heated at a temperature between 90 and 240°C, under a pressure of 1 to 45 bar, for 5 to 90 minutes.

7. The process as claimed in claim 6, **characterized in that**, during the aerated thermal hydrolysis, the temperature is between 120°C and 200°C, in particular equal to 160°C, while the pressure is between 4 and 12 bar, in particular equal to 8 bar.

8. The process as claimed in any one of the preceding claims, **characterized in that** the injection of oxidizing agent is controlled by measuring carbon dioxide CO₂ in the gaseous headspace of a hydrolysis reactor and that staging of the injection is carried out in order to provide a homogeneous reaction.

9. The process as claimed in claim 3, **characterized in that** it comprises a regulation of the injection of steam by controlling the temperature in the gaseous headspace of a hydrolysis reactor.

10. The process as claimed in claim 1, **characterized in that** the duration of the first digestion, like that of the second digestion, is between 14 or 15 days under mesophilic conditions.

11. The process as claimed in claim 1, **characterized in that** a regulation of the dilution (40) is carried out according to the ammonia content and the pH on exiting the second digestion.

12. The process as claimed in claim 1, **characterized in that** a regulation of the temperature of the sludge is envisioned at the entry into the first digestion (13), by heating with the loop of water (20), and/or by exchange with the hydrolyzed sludge (21).

13. The process as claimed in claim 1, **characterized in that** the biogas produced by digestion is used as fuel in cogeneration (30) for producing energy and heat, and **in that** the heat from the flue gases of the biogas at the outlet of one or more cogeneration units (30) is used through an exchanger (31) in order to provide the energy required for the aerated thermal hydrolysis.

14. The process as claimed in claim 13, **characterized in that** a use of the heat at the outlet of one or more cogeneration units (30), through an exchanger (32), in order to provide the energy required for heating the digester (13), is envisioned.

15. The process as claimed in claim 1, **characterized by** the addition of a pretreatment (14) aimed at removing the tow and grit according to the quality of the sludge to be treated.

16. The process as claimed in any one of the preceding claims, **characterized in that**, during the hydrolysis, an injection of acid or a base is carried out such that an acidic pH of less than 4, preferably less than 2, is established by injecting acid, while a basic pH greater than 10, preferably less than 12, is established by injecting a base.

17. A facility for implementing a process for treating sludge as claimed in claim 1, said sludge to be treated being categorized into two categories, easy sludge 10, and difficult sludge 12, **characterized in that** it comprises
- a first mesophilic or thermophilic digester (13) of at least one fraction of a stream of organic waste, comprising at least the easy sludge (10), the first digester 13 being dimensioned for a residence time of between 9 and 19 days
- a dehydrator (15) of all of the digested and nondigested waste, undigested waste being all or part of the difficult sludge (12),
- a reactor for aerated thermal hydrolysis (16) of the dehydrated waste, with means for injection (50a, 50b) of an oxidizing agent (50) and a heating means for setting to the required temperature,
- a second mesophilic or thermophilic digester (17) of the stream of hydrolyzed waste, separate from the first digester, the second digester 17 being dimensioned for a residence time of between 9 and 19 days.
- a loop (20) of thermal fluid comprising a heat exchanger (18) in which the hydrolyzed sludge is cooled so as to reach the temperature necessary for the operation of the second digester (17), as well as an exchanger (11) for heating the mud entering the first digester (13),
- and means for injecting water into the waste stream upstream of the inlet of the second digester to ensure a dilution (40) of the stream and to control the functioning of the second digestion.

18. The facility as claimed in claim 17, **characterized in that** it comprises at least one cogeneration unit (30) for the combustion of the biogas produced by digestion and for producing energy and heat, an exchanger (31) being envisioned at the outlet of one or more cogeneration units so as to have biogas combustion flue gases pass through it and to provide the energy required for the aerated thermal hydrolysis and/or for heating the digester.

19. The facility as claimed in any one of claims 17 to 18, **characterized in that** it comprises a means for regulating the pH in the hydrolysis reactor by injecting an acid or a base in order to improve the hydrolysis kinetics.
